# EUROPÄISCHE PATENTSCHRIFT

(11) **EP 1 705 367 B1**
(45) Veröffentlichungstag und Bekanntmachung des Hinweises auf die Patenterteilung: **03.09.2008**
(21) Anmeldenummer: 05027770.6
(22) Anmeldetag: 19.12.2005
(51) Int. Cl.: F02M 55/02, F02M 35/116

(54) **Brennkraftmaschine mit mindestens zwei Zylinderbankreihen**
Internal combustion engine with at least two cylinder rows
Moteur à combustion interne avec au moins deux rangées de cylindres

(30) Priorität: 01.03.2005 DE 102005009117
(43) Veröffentlichungstag der Anmeldung: 27.09.2006
(73) Patentinhaber: Dr. Ing. h.c. F. Porsche Aktiengesellschaft, 70435 Stuttgart (DE)
(72) Erfinder: Dieterle, Frank, 71254 Ditzingen (DE)

(56) Entgegenhaltungen:
- EP-A- 0 352 820
- EP-A- 0 405 612
- EP-A- 0 892 170
- US-A1- 2002 083 924
- US-A1- 2002 179 025

## Beschreibung

Die Erfindung betrifft eine Brennkraftmaschine mit mindestens zwei Zylinderbankreihen gemäß den Merkmalen des Oberbegriffs des Patentanspruchs 1.

Aus der EP 0 892 170 A1 ist eine Dieselbrennkraftmaschine mit zwei Zylinderbankreihen bekannt, bei der für die Kraftstoffversorgung eine zentrale Versorgungsleitung vorgesehen ist, wobei zwischen der zentralen Versorgungsleitung und den im jeweiligen Zylinderkopf angeordneten Kraftstoff-Injektoren Kraftstoffeinzelleitungen vorgesehen sind.

Aus der EP 0 405 612 B1 ist eine Brennkraftmaschine mit V-förmig zueinander angeordneten Zylindern bekannt, bei der im Innen-V an den Zylinderköpfen entsprechende Kraftstoffinjektoren befestigt sind. Darüber erstreckt sich ein zentral angeordnetes Luftansaugmodul.

Aufgabe der Erfindung ist es, bei einer Brennkraftmaschine mit einer Common-Rail-Einspritzung die Kraftstoffversorgungseinrichtung insgesamt platzsparend an bzw. in der Brennkraftmaschine zu integrieren.

Die Aufgabe wird durch die im Patentanspruch 1 angegebenen Merkmale gelöst.

Es wird auf vorteilhafte Art und Weise vorgeschlagen, dass die zentrale Kraftstoff-Versorgungsleitung (Common-Rail) zentral unterhalb der Luftansauganlage der Brennkraftmaschine angeordnet ist, wobei von den beiden Längsseiten des Common-Rails Einzelleitungen abgezweigt sind, die an im Zylinderkopf befestigte Injektoren angeschlossen sind. Damit ist die Kraftstoff-Hochdruckversorgungseinheit - bis auf die Hochdruckpumpe - komplett im Innen-V angeordnet und vor äußeren Beschädigungen geschützt. Die akustisch allgemein auffälligen Einspritzventile können durch die Luftansauganlage abgeschirmt werden.

Die modulartig aufgebaute Luftansauganlage weist auf ihrer Unterseite Ausnehmungen auf, in denen die Kraftstoff-Einzelleitungen platzsparend aufgenommen sind.

Durch die in den Unteransprüchen angegebenen Merkmale sind weitere vorteilhafte Ausgestaltungen und Weiterbildungen der Brennkraftmaschine möglich.

Die Luftansauganlage ist schalenförmig ausgebildet, wobei die Ausnehmungen für die Kraftstoff-Einzelleitungen in einer Unterschale der Luftansauganlage ausgebildet sind.

Die Luftansauganlage weist eine Ober- und Unterschale sowie ein dazwischen angeordnetes Mittelteil auf, in denen im zusammengesetzten Zustand Luftansaugkanäle für die einzelnen Zylinder ausgebildet sind.

Ein Ausführungsbeispiel der Erfindung ist in der Zeichnung dargestellt und wird im nachfolgenden näher beschrieben.

### Es zeigen:

- Fig. 1: eine Perspektivansicht auf einen Teil einer Brennkraftmaschine und

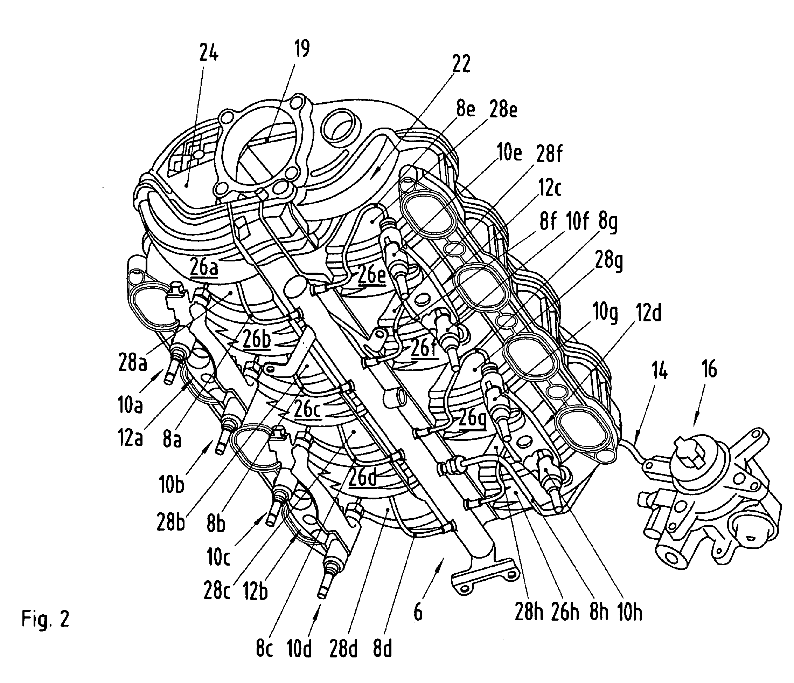

- Fig. 2: eine Ansicht auf eine Kraftstoff-Versorgungseinrichtung der Brennkraftmaschine von unten gesehen und
- Fig. 3: einen Querschnitt durch eine Luftansauganlage.

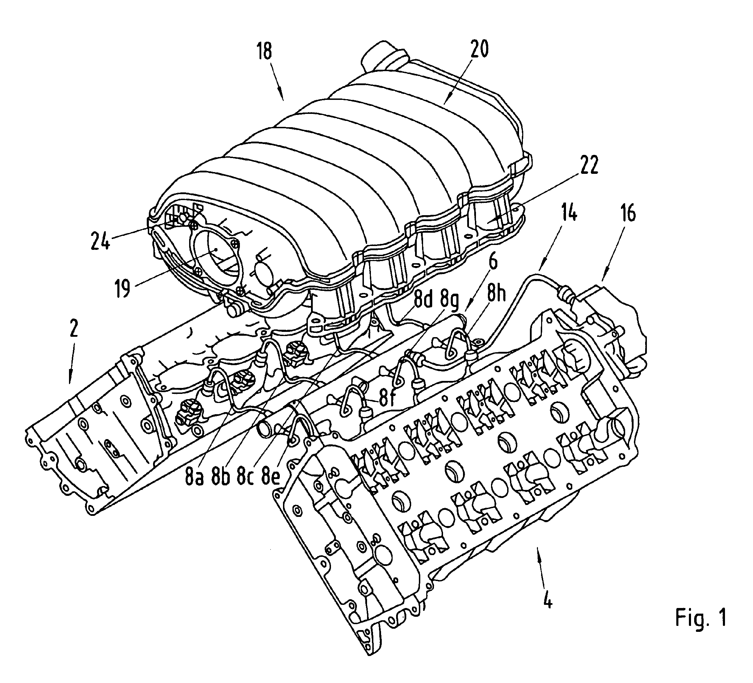

In Fig. 1 sind die Teile einer Brennkraftmaschine dargestellt, die zur Erläuterung des beanspruchten Gegenstandes erforderlich sind. Die Brennkraftmaschine ist bspw. als V8-Motor ausgebildet und weist dementsprechend zwei Zylinderköpfe 2 und 4 auf. Zwischen den beiden Zylinderköpfen 2 und 4 ist im Innen-V des Motors eine zentrale Kraftstoff-Versorgungsleitung 6, im Folgenden als Common-Rail bezeichnet, angeordnet. Von den beiden Längsseiten des Common-Rails 6 zweigen Kraftstoff-Einzelleitungen 8a bis 8h ab, die jeweils zu einem in den Zylinderköpfen 2, 4 befestigten Kraftstoff-Injektor 10a bis 10h führen. Die Kraftstoff-Injektoren 10a bis 10h sind dabei jeweils paarweise mittels eines Niederhalters 12a bis 12d im Zylinderkopf befestigt. Am Common-Rail 6 ist eine Kraftstoff-Versorgungsleitung 14 befestigt, die an eine Kraftstoff-Hochdruckpumpe 16 angeschlossen ist. Die Hochdruckpumpe 16 ist stirnseitig am Zylinderkopf 4 befestigt und wird über eine nicht dargestellte Nockenwelle angetrieben.

Oberhalb der aus dem Common-Rail 6 und den Kraftstoff-Injektoren 10a bis 10h bestehenden Kraftstoff-Versorgungseinrichtung ist zwischen den beiden Zylinderbänken eine Luftansauganlage - im Folgenden als Luftansaugmodul 18 bezeichnet - angeordnet. Über eine zentrale Öffnung 20, an der ein nicht dargestelltes Drosselklappengehäuse befestigt ist, wird auf bekannte Art und Weise Verbrennungsluft angesaugt und über im Luftansaugmodul 18 ausgebildete Luftansaugkanäle den einzelnen Zylindern zugeführt. Das Luftansaugmodul 18 ist dreiteilig ausgebildet und weist eine Ober- und Unterschale 20 und 22 auf, zwischen denen ein Mittelteil 24 angeordnet ist. Im zusammengebauten Zustand werden durch die drei Teile 20, 22 und 24 entsprechende Luftansaugkanäle 26a bis 26h ausgebildet. Zwischen den Luftansaugkanälen 26a bis 26h sind in der Unterschale 22 Ausnehmungen 28a bis 28h ausgebildet, in denen die Kraftstoff-Einzelleitungen 8a bis 8h verlaufen bzw. aufgenommen sind.

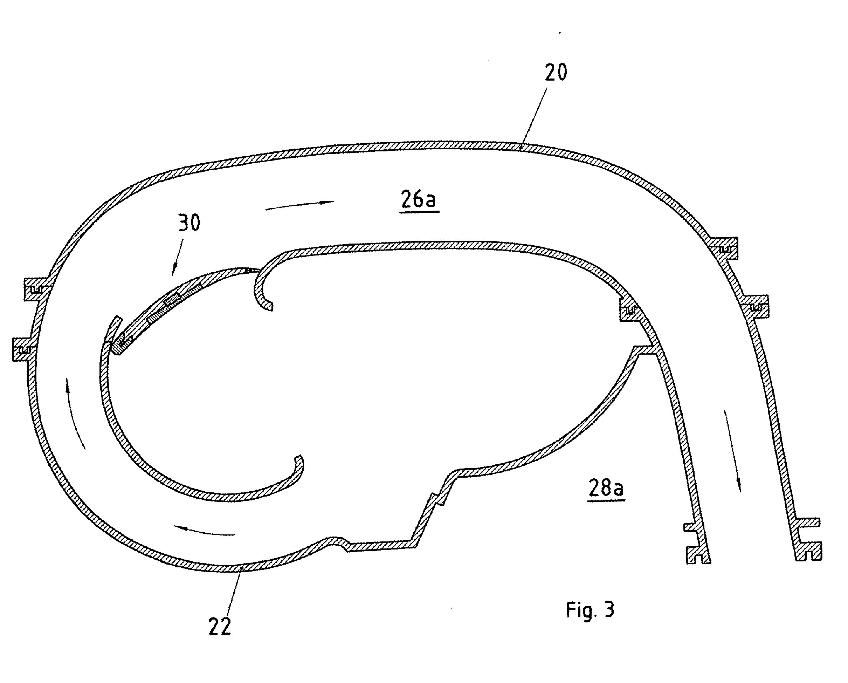

Wie ein Querschnitt durch das Luftansaugmodul 18 zeigt (siehe Figur 3), verlaufen die Luftansaugkanäle 26a bis 26h spiralförmig und weisen entsprechende Schaltklappen 30 auf, über die in Abhängigkeit von der Motordrehzahl zwei unterschiedliche Saugrohrlängen darstellbar sind. In der geschlossenen Stellung (siehe Figur 3) ist dabei das lange Saugrohr geschaltet, während bei geöffneter Schaltklappe 30 die Verbrennungsluft über die freigegebene Öffnung zu den einzelnen Zylindern gelangt.

Dadurch, dass in der Unterschale 22 entsprechende Freiräume bzw. Ausnehmungen 28a bis 28h für die Aufnahme der Injektoren 10a bis 10h und der Kraftstoff- Einzelleitungen 8a bis 8h ausgebildet sind, können die Luftansaugkanäle 26a bis 26h mit maximalen Radien und minimalen Strömungsverlusten dargestellt werden, da sie seitlich an den Injektoren 10a bis 10h vorbeilaufen.

## Patentansprüche

1. Brennkraftmaschine mit mindestens zwei Zylinderbankreihen, die vorzugsweise V-förmig zueinander ausgerichtet sind, wobei zwischen zwei Zylinderbankreihen eine Luftansauganlage (18) angeordnet ist, sowie mit einer Kraftstoffversorgungseinrichtung (6, 8, 14, 16), die zumindest teilweise unterhalb der Luftansauganlage (18) angeordnet ist, wobei für die Kraftstoffversorgung eine zentrale Versorgungsleitung (6) vorgesehen ist, von deren beiden Längsseiten Kraftstoff-Einzelleitungen (8a bis 8h) abgezweigt sind, die an im Zylinderkopf (2, 4) befestigten Kraftstoff-Injektoren (10a bis 10h) angeschlossen sind,
**dadurch gekennzeichnet, dass,**
die Kraftstoff-Einzelleitungen (8a bis 8h) zumindest teilweise in Ausnehmungen (28a bis 28h) verlaufen, die auf der Unterseite der Luftansauganlage (18) ausgebildet sind.

2. Brennkraftmaschine nach Anspruch 1, **dadurch gekennzeichnet, dass** die Luftansauganlage (18) eine Unterschale (22) aufweist, in der die Ausnehmungen (28a bis 28h) eingebracht sind.

3. Brennkraftmaschine nach Anspruch 1 oder 2, **dadurch gekennzeichnet, dass** die Luftansauganlage eine Ober- und Unterschale (20, 22) sowie ein dazwischen angeordnetes Mittelteil (24) aufweist, in denen im zusammengesetzten Zustand Luftansaugkanäle (26a bis 26h) für die einzelnen Zylinder ausgebildet sind.

## Claims

1. Internal combustion engine having at least two cylinder bank rows which are preferably aligned in a V-shape relative to one another, with an air induction system (18) being arranged between two cylinder bank rows, and having a fuel supply device (6, 8, 14, 16) which is arranged at least partially below the air induction system (18), with a central supply line (6) being provided for the fuel supply, from the two longitudinal sides of which supply line (6) branch off individual fuel lines (8a to 8h) which are connected to fuel injectors (10a to 10h) which are fastened in the cylinder head (2, 4),
**characterized in that**
the individual fuel lines (8a to 8h) run at least partially in recesses (28a to 28h) which are formed on the underside of the air induction system (18).

2. Internal combustion engine according to Claim 1, **characterized in that** the air induction system (18) has a lower shell (22) in which the recesses (28a to 28h) are formed.

3. Internal combustion engine according to Claim 1 or 2, **characterized in that** the air induction system has an upper and a lower shell (20, 22) and, arranged between the latter, a central part (24) in which, in the assembled state, air induction ducts (26a to 26h) for the individual cylinders are formed.

## Revendications

1. Moteur à combustion interne comprenant au moins deux rangées de cylindres, qui sont orientés de préférence en forme de V les uns par rapport aux autres, une installation d'admission d'air (18) étant disposée entre deux rangées de cylindres, et comprenant aussi un dispositif d'alimentation en carburant (6, 8, 14, 16), qui est disposé au moins en partie en dessous de l'installation d'admission d'air (18), une conduite d'alimentation centrale pour l'alimentation en carburant (6) étant prévue, des deux côtés longitudinaux de laquelle partent des conduites de carburant séparées (8a à 8h) qui sont raccordées à des injecteurs de carburant (10a à 10h) fixés dans la culasse (2, 4),
**caractérisé en ce que**
les conduites de carburant séparées (8a à 8h) s'étendent au moins en partie dans des évidements (28a à 28h) qui sont réalisés sur le côté inférieur de l'installation d'admission d'air (18).

2. Moteur à combustion interne selon la revendication 1, **caractérisé en ce que** l'installation d'admission d'air (18) présente une coque inférieure (22) dans laquelle sont pratiqués les évidements (28a à 28h).

3. Moteur à combustion interne selon la revendication 1 ou 2, **caractérisé en ce que** l'installation d'admission d'air présente une coque supérieure et une coque inférieure (20, 22) ainsi qu'une partie intermédiaire (24) entre elles, dans lesquelles sont réalisés, dans l'état assemblé, des canaux d'admission d'air (26a à 26h) pour les différents cylindres.
